# EUROPEAN PATENT SPECIFICATION

(11) **EP 1 170 991 B1**
(45) Date of publication and mention of the grant of the patent: **17.12.2003**
(21) Application number: 00917498.8
(22) Date of filing: 07.04.2000
(51) Int. Cl.: A01K 37/00

(54) **COVER MEMBER FOR ASSEMBLY WITH A BEAK PART AND METHOD FOR ATTACHING THEREOF**
ABDECKUNG FÜR EIN SCHNABELTEIL UND VERFAHREN ZU DESSEN BEFESTIGUNG
CAPUCHON DESTINE A ETRE PLACE SUR UN BEC ET PROCEDE DE FIXATION DE CE CAPUCHON

(30) Priority: 08.04.1999 NL 1011757
(43) Date of publication of application: 16.01.2002
(73) Proprietor: Jansen Poultry Equipment B.V., 3771 MB Barneveld (NL)
(72) Inventor: JANSEN, Albrecht, Hendrik, NL-3772 MC Barneveld (NL); LUTTIKHUIZEN, Jacob, Gerrit, NL-3771 RK Barneveld (NL)
(74) Representative: Van den Heuvel, Henricus Theodorus
(86) International application number: NL0000231
(87) International publication number: WO00060929

(56) References cited:
- FR-A- 2 304 286
- US-A- 1 877 897

## Description

The invention relates to a cover member for assembly with a beak part of a poultry animal according the preamble of claim 1 and a method for attaching such a cover member according the preamble of claim 5.

In the farming of poultry, such as for instance chickens, the animals will peck at each other if no measures are taken. The pecking behaviour occurs irrespective of the conditions under which the animals are kept, thus in cage accommodation, aviary systems, free-range houses, and even in the case of animals foraging freely outside. Pecking results in debilitation and death among the animals and therefore in reduced production. An effective solution for making the pecking behaviour less harmful is to trim (shorten) the upper and/or lower beak of the animals. In the Netherlands at least there is a social trend and a judicial framework ("ingrepenbesluit" of 1 September 1996) whereby shortening of beaks is at least less than desirable. The most important argument here for is animal welfare. Trimming of the beak results in many cases in phantom limb pain during further life. A known alternative to shortening of beaks is selection of less aggressive poultry breeds; such selection has the drawback however that there is less possibility of selection on the basis of economic factors.

The American patent US 1,877,897 describes a device for preventing feather-pulling among poultry. This device consists of a cap for arranging on an upper beak part having edges which fit between the upper and lower beak part whereby these cannot be placed onto one another. It thus becomes impossible to grip feathers with the beak which is always open over at least a limited distance.

The French patent application FR 2 304 286 describes a device for preventing pecking of poultry. The application describes for this purpose a cover member which can be attached to an upper beak part of a bird by means of a pin which is placed through the nostrils and apertures specially arranged for this purpose in the cover member.

The invention has for its object to provide a solution for making the pecking behaviour of poultry less harmful without physical operations on the animals, such as for instance by trimming the beak, without necessary selection of less aggressive breeds and without disrupting the eating and living patterns of the poultry.

The invention provides for this purpose a cover member according claim 1. The pecking behaviour of a poultry animal provided with such a cover member will be less harmful to other animals since the rounded peripheral edge will prevent damage to feathers or even cannibalism. It is also unnecessary to remove one or more beak portions or to drill through nostrils or beak parts, so that phantom limb pains will no longer occur. The cover member is embodied such that it can be attached without severing tissues of the animal. The cover member according to the invention thus provides an economic, effective and animal-friendly solution for making the pecking behaviour of poultry harmless. The cover member must of course be embodied such that it does not endanger the food-gathering of the animals and upkeep of the plumage remains possible. This is realized in that the contact side of the beak part with cover member remains free so that it is possible to put together the beak parts properly despite the presence of the cover member. The cover member does not therefore impede collection of food or other desirable natural behaviour. A further advantage of the cover member according to the invention is that the intrinsic value of the animals thereby remains higher than when the beaks are trimmed. The economic lifespan can also increase.

In a preferred embodiment the surface part can be brought counter to a bias into a form which fits onto the exterior form of a beak part. One option is to include engaging elements for engaging on the nostrils. A good fit of the cover member on a beak part can prevent an empty space being created between cover member and beak part with the associated hazard of contamination. A good fit of the cover member on a beak part is also desirable for a firm attachment of the cover member on the beak part. When a cover member is attached at an early age it is possible that it will grow fixedly onto or fuse with a beak part and use can for instance be made herein of a fastening member which decomposes in the course of time.

The cover member can for instance be manufactured from plastic such as a thermoplastic plastic. It is also possible for the cover member to be manufactured at least partly from a material which is flexible at room temperature. A plastic can provide the desired strength in inexpensive manner. A thermoplastic plastic can for instance be made deformable with heat such that the cover member can be formed to the shape of a beak part, where after it is firmly attached after cooling. Use of a flexible material in the cover member can result in the advantage that pecking of a poultry animal is elastically decelerated.

The invention also provides a method for attaching a cover member as described above to a beak part according claim 5. The optimum solution can be chosen subject to the circumstances. It is thus possible for instance to attach a cover member to a beak part using glue

The present invention will be further elucidated with reference to the following shown non-limitative embodiments. Herein:
figure 1 shows a view of a chicken head with untrimmed beak,
figure 2 shows a view of the chicken head of figure 1, with a cover member according to the invention attached to the upper beak part,
figure 3a shows a side view of a beak with a cover member according to the invention glued onto the upper beak part,
figure 3b shows a side view of a beak with a cover member according to the invention clamped onto the upper beak part,
figure 4 is a top view of a poultry beak with a cover member according to the invention attached thereto,
figure 5a is a side view of a chicken head with a cover member attached to the upper beak part and engaging in the nostrils,
figure 5b shows a cross-section through the beak with cover member as shown in figure 5a, and
figure 6 is a side view of a chicken head with yet another variant of the cover member according to the invention.

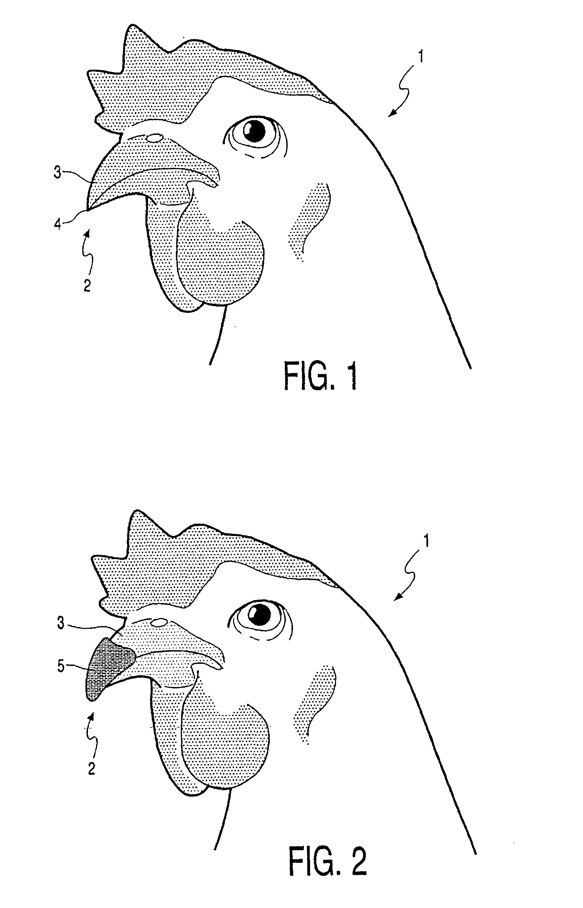

Figure 1 shows a chicken head 1 with an untrimmed beak 2. it can be seen clearly that an upper beak part 3 ends in a sharp point 4. The sharp point 4 results in damage soon being caused when other animals are pecked.

The chicken head 1 with untrimmed beak 2 shown in figure 2 is provided with a cover member 5 which is attached to the upper beak part 3 and with which the sharp point 4 as shown in figure 1 is shielded. With a cover member 5 pecking at other animals will result less quickly or even not at all in damage to feather cover, cannibalism and so on.

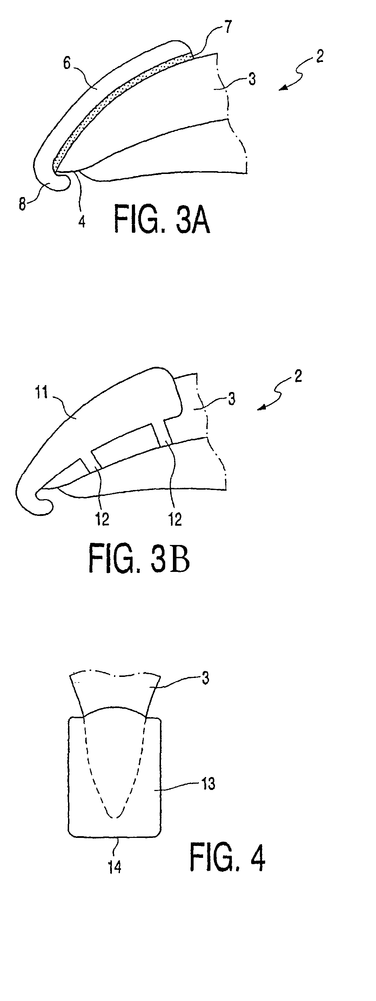

Figure 3a shows a side view of an untrimmed beak 2, on the upper beak part 3 of which a cover member 6 is glued via an adhesive layer 7. Shown clearly is that the sharp point 4 of upper beak part 3 is covered by a curved edge part 8 of cover member 6.

Figure 3b shows the untrimmed beak 2 with a cover member 11 clamped onto upper beak part 3. Cover member 11 is provided for this purpose with deformable lips 12 which are folded round the edges of upper beak part 3.

Figure 4 shows a top view of an upper beak part 3 with a cover member 13 attached thereto. This cover member 13 is provided with a flattened front part 14 to limit even further the risk of possible damage resulting from pecking.

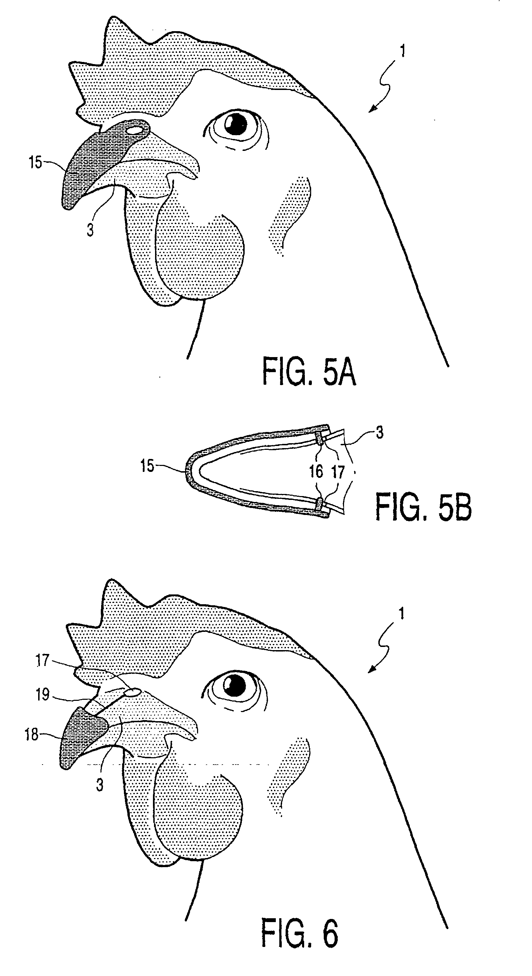

Figure 5a shows chicken head 1 with a cover member 15 attached to the upper beak part 3 and engaging on nostrils, which in this figure are no longer visible.

Figure 5b shows cover member 15 in cross-section, wherein protruding elements 16 are also shown which engage in nostrils 17 which are part of upper beak part 3.

Finally, figure 6 shows a side view of chicken head 1 with a cover member 18 which engages with an elastic wire 19 on nostrils 17. The elastic wire 19 can be manufactured from a material which decomposes in the course of time when cover member 18 is formed and attached to the upper beak part 3 at a moment in time such that as the upper beak part 3 grows the cover member 18 becomes rigidly secured without wire 19 still being required for this purpose.

Although the invention is elucidated with reference to only a few embodiments, it will be apparent to all that the invention is in no way limited to the described and shown embodiments. On the contrary, many variations are still possible for the skilled person within the scope of the invention as defined by the appended claims.

## Claims

1. Cover member (5,6,11,13,15,18) for assembly with a beak part (3) of a poultry animal (1), in particular a chicken, comprising an at least partly rounded peripheral edge, which cover member (5,6,11,13,15,18) is provided with a preformed surface part which fits onto the exterior form of the beak part (3), **characterised in that** the cover member is provided with an adhesive layer (7) to attach the cover member (5,6,11,13,15,18) without operating on the poultry animal (1) in a manner such that the contact side of the beak part (3) is left clear by the cover member (5,6,11,13,15,18).

2. Cover member (5,6,11,13,15,18) as claimed in any of the foregoing claims, wherein the cover member (5,6,11,13,15,18) is manufactured from aplastic.

3. Cover member (5,6,11,13,15,18) as claimed in any of the foregoing claims, wherein the cover member (5,6,11,13,15,18) is manufactured from a thermoplastic plastic.

4. Cover member (5,6,11,13,15,18) as claimed in any ofthe foregoing claims, wherein the cover member (5,6,11,13,15,18) is manufactured from a material which is flexible at room temperature.

5. Method for attaching a cover member (5,6,11,13,15,18) as claimed in any of the foregoing claims, **characterised in that** the cover member (5,6,11,13,15,18) close fitted onto a beak part (3) by adhering the cover member (5,6,11,13,15,18) to the beak part (3).

## Patentansprüche

1. Abdeckung (5,6,11,13,15,18) zur Befestigung an einem Schnabelteil (3) eines Geflügeltieres (1), insbesondere eines Huhnes, die eine zumindest teilweise abgerundete peripherische Kante umfasst, welche Abdeckung (5,6,11,13,15,18) mit einem vorgeformten Oberflächenteil versehen ist, das auf die äußere Form des Schnabelteils (3) passt, **dadurch gekennzeichnet, dass** die Abdeckung mit einer Klebstoffschicht (7) versehen ist, um die Abdeckung (5,6,11,13,15,18) ohne Operation an dem Geflügeltier (1) auf eine Weise zu befestigen, dass die Berührungsseite des Schnabelteils (3) von der Abdeckung (5,6,11,13,15,18) freigelassen wird.

2. Abdeckung (5,6,11,13,15,18) nach irgendeinem der vorhergehenden Ansprüche, wobei die Abdeckung (5,6,11,13,15,18) aus einem Kunstharz gefertigt ist.

3. Abdeckung (5,6,11,13,15,18) nach irgendeinem der vorhergehenden Ansprüche, wobei die Abdeckung (5,6,11,13,15,18) aus einem thermoplastischen Kunstharz gefertigt ist.

4. Abdeckung (5,6,11,13,15,18) nach irgendeinem der vorhergehenden Ansprüche, wobei die Abdeckung (5,6,11,13,15,18) aus einem Werkstoff gefertigt ist, der bei Raumtemperatur flexibel ist.

5. Verfahren zur Befestigung einer Abdeckung (5,6,11,13,15,18) nach irgendeinem der vorhergehenden Ansprüche, **dadurch gekennzeichnet, dass** die Abdeckung (5,6,11,13,15,18) an einem Schnabelteil (3) satt anliegt, indem die Abdeckung (5,6,11,13,15,18) mit dem Schnabelteil (3) verklebt wird.

## Revendications

1. Pièce de recouvrement (5, 6, 11, 13, 15, 18) pour assemblage avec une partie (3) du bec d'une volaille (1), en particulier d'un poulet, comprenant un bord périphérique au moins partiellement arrondi, laquelle pièce de recouvrement (5, 6, 11, 13, 15, 18) est pourvue d'une surface préformée qui s'adapte à la forme extérieure de la partie (3) du bec, **caractérisée en ce que** la pièce de recouvrement est pourvue d'une couche adhésive (7) pour attacher la pièce de recouvrement (5, 6, 11, 13, 15, 18) sans opérer la volaille (1), de manière telle que la face de contact de la partie (3) du bec est laissée libre par la pièce de recouvrement (5, 6, 11, 13, 15, 18).

2. Pièce de recouvrement (5, 6, 11, 13, 15, 18) selon l'une quelconque des revendications précédentes, la pièce de recouvrement (5, 6, 11, 13, 15, 18) étant fabriquée en plastique.

3. Pièce de recouvrement (5, 6, 11, 13, 15, 18) selon l'une quelconque des revendications précédentes, la pièce de recouvrement (5, 6, 11, 13, 15, 18) étant fabriquée en plastique thermoplastique.

4. Pièce de recouvrement (5, 6, 11, 13, 15, 18) selon l'une quelconque des revendications précédentes, la pièce de recouvrement (5, 6, 11, 13, 15, 18) étant fabriquée en un matériau qui est souple à température ambiante.

5. Procédé pour attacher une pièce de recouvrement (5, 6, 11, 13, 15, 18) selon l'une quelconque des revendications précédentes, **caractérisé en ce que** la pièce de recouvrement (5, 6, 11, 13, 15, 18) est ajustée sur une partie (3) du bec en collant la pièce de recouvrement (5, 6, 11, 13, 15, 18) à la partie (3) du bec.
